# EUROPÄISCHE PATENTSCHRIFT

(11) **EP 0 739 817 B1**
(45) Veröffentlichungstag und Bekanntmachung des Hinweises auf die Patenterteilung: **05.03.2003**
(21) Anmeldenummer: 96103616.7
(22) Anmeldetag: 08.03.1996
(51) Int. Cl.: B64F 5/00, G01R 31/00

(54) **Autarke Steuereinheit zur externen Überpüfung der Fahrwerksfunktionen eines Flugzeuges**
Self-sufficient control unit for externally checking the operation of an aircraft landing gear
Unité de commande autonome pour la vérification externe du fonctionnement d'un train d'atterrissage d'aéronef

(30) Priorität: 29.04.1995 DE 19515901
(43) Veröffentlichungstag der Anmeldung: 30.10.1996
(73) Patentinhaber: Airbus Deutschland GmbH, 21129 Hamburg (DE)
(72) Erfinder: Heil, Leonhard, D-29640 Schneverdingen (DE)
(74) Vertreter: Hansmann, Dierk, Dipl.-Ing.

(56) Entgegenhaltungen:
- US-A- 2 643 370
- US-A- 4 251 765
- US-A- 4 475 196
- US-A- 4 782 292

## Beschreibung

Die Erfindung bezieht sich auf eine autarke Steuereinheit zur externen Überprüfung der Fahrwerksfunktionen eines Flugzeuges gemäß dem Anspruch 1.

Eine bekannte Vorgehensweise bei der Überprüfung der Fahrwerksfunktionen besteht darin, daß das Fahrwerk einschließlich die Fahrwerksklappen eines Passagierflugzeuges, zu deren Funktionsüberprüfung sich der Flugzeugrumpf im angehobenen und fixierten Zustand befindet, nur in Abhängigkeit der bordeigenen Elektrik / Elektronik vom Cockpit aus getestet wird. Da die laufenden Prüfungen an der Bordanlage die Testung der Fahrwerksfunktionen behindern bzw. nur in deren Rahmen mit erfolgen können, verlängert sich die Verweildauer des Flugzeuges an der Stelle seines Bauplatzes. Es wird zusätzlich Beobachtungspersonal benötigt, das die zähligen Fahrwerkstests kontrolliert. Während der Testphase besteht keine Möglichkeit der Warnung gegenüber dritten Personen, so daß ein Restrisiko an Unfallgefahr gegenüber dem außerbords befindlichen Montagepersonal im Gefahrensektor besteht. Das Unfallrisiko besteht infolge ungewollter Bedienung des Fahrwerkes, wodurch der weitere Montageablauf behindert wird.

Steuereinheiten zur Überprüfung der Funktionen eines Flugzeuges sind aus der US 5,111,402 und US 5,077,671 bekannt. Danach offenbart die US 5,111,402 eine autarke Steuereinheit zur externen Überprüfung der Funktionen eines Flugzeuges einschließlich der Fahrwerksfunktionen. Sie umfaßt Spannungsregler, Signalgeber, Wahlumschalter und Betätigungstaster sowie Steuerleitungen. Letztere sind mit den elektrischen Steuerelementen eines Flugzeuges mittels Steckverbindern verbindbar, die sich außerbords eines Flugzeuges befinden. Aus der US 5,077,671 ist ferner eine Steuereinheit zur Überprüfung der Funktionen eines Flugzeuges bekannt, die eine Zeitverzögerungseinheit aufweist.

Diese Steuereinheiten zur Überprüfung der spezifischen Funktionen eines Flugzeuges benötigen einen umfangreichen Geräteaufbau, dessen einfache (unkomplizierte) Handhabung - unbeachtet der qualitativen Erfassung und Auswertung der Testergebnisse mit einem quantitativ aufwendigen Geräteaufbau - , bezweifelt wird. Mit diesen Testsystemen, welche zudem weitere spezifische Systeme und Untersysteme eines Flugzeuges überprüfen, wird keine unabhängige (autarke) und parallele Überprüfung der Fahrwerksfunktionen erfolgen, da letztgenannter Funktionstest (nach der US 5,111,402) sich dann entweder dem vordefinierten Prüfalgorythmus unterordnet oder (nach der US 5,077,671) gänzlich entfällt. Weiterhin lassen sich nach der US 5,111,402 die Fahrwerksfunktionen nicht ohne interne Stromversorgung des Flugzeuges durchführen. Die Nachteile dieser vorgenannten Prüftechnologien wirken beim Flugzeughersteller und -betreiber bei Störungen, Fehlersuche und Reparatur am (an den) Fahrwerk(-sklappen) und auch aus dem Grund der Reduzierung der Verweildauer eines Flugzeuges gleichermaßen nachteilig.
Den genannten Druckschriften ist auch nirgends ein Hinweis zu entnehmen, der dazu führen könnte, die externe Überprüfung der Fahrwerksfunktionen eines Flugzeuges autark vorzunehmen.

Demzufolge liegt der Erfindung die Aufgabe zugrunde, eine gattungsgemäße Steuereinheit derart zu gestalten, daß mit ihr eine außerbords gesteuerte autarke Prüfung des Fahrwerkes einschließlich der Fahrwerksklappen auf Funktion geschieht, die unabhängig und parallel der laufenden Systemprüfungen an der Bordanlage eines Flugzeuges erfolgt. Das Betätigen der Fahrwerksklappen und das Ein- und Ausfahren des Fahrwerkes wird vor und während der autarken Prüfung durch eine akustische Warnung begleitet, um Personenschäden zu vermeiden.

Diese Aufgabe wird durch die im Anspruch 1 angegebenen Maßnahmen gelöst. In den weiteren Unteransprüchen sind zweckmäßige Ausgestaltungen dieser Maßnahmen angegeben.

Die Erfindung ist in einem Ausführungsbeispiel anhand der Zeichnungen näher beschrieben. Es zeigen
- Fig. 1: ein Blockschaltbild der autarken Steuereinheit;
- Fig.2: ein Übersichtsschaltbild der autarken Steuereinheit;
- Fig.3: ein ausführliches Schaltbild der autarken Steuereinheit.

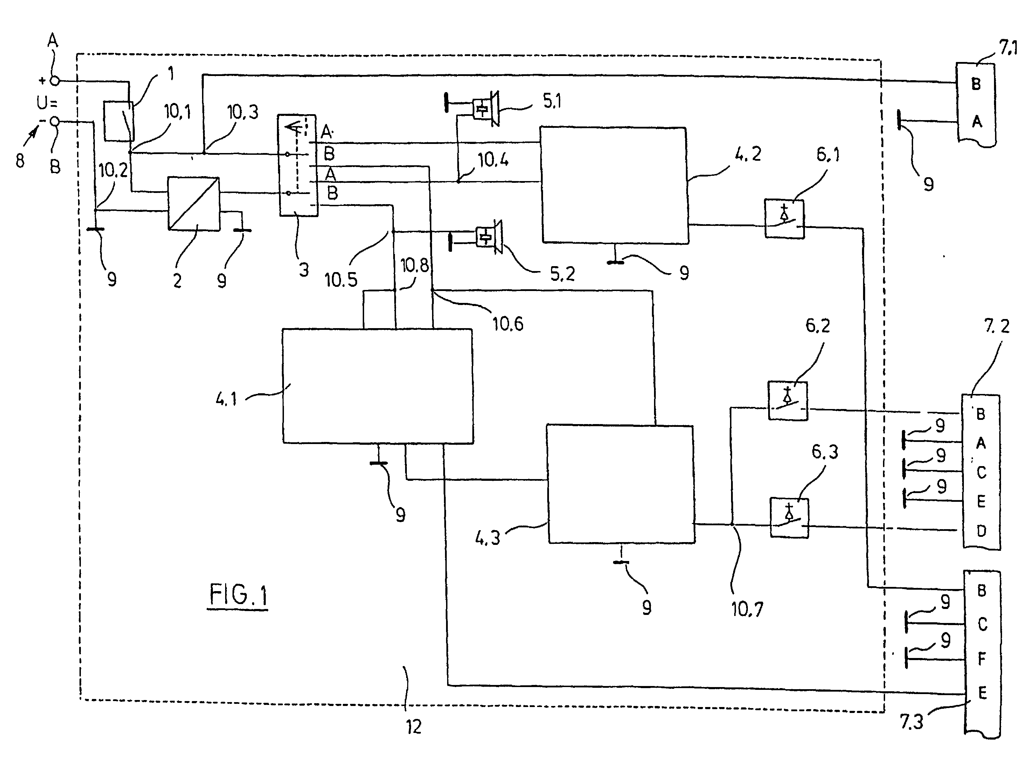

In der **Fig.1** ist die autarke Steuereinheit 12 zur externen Überprüfung der Fahrwerksfunktionen eines Flugzeuges in ihrem grundsätzlichen Aufbau als Blockschaltbild dargestellt. Danach besteht die autarke Steuereinheit 12 aus einem Schutzschalter 1, einem Spannungsregler 2, einem zweipoligen Wahlumschalter 3, drei Zeitverzögerungseinheiten 4.1, 4.2, 4.3, zwei Piezo - Signalgeber 5.1, 5.2 und drei Betätigungstastern 6.1, 6.2, 6.3, die schaltungsmäßig miteinander verbunden sind. Der Wahlumschalter 3 besitzt drei Schaltstellungen, wobei sich seine beiden Betätigungsglieder (je Schalterpol) federbelastet aus einer Nullstellung (als Ausgangsstellung) synchron in eine Einsstellung (bei vertikaler Linksbewegung / Position A) oder Zweistellung (bei vertikaler Rechtsbewegung / Position B) verändern lassen. Jedem der beiden Schaltereingänge sind strombahnbezogen je zwei Schalterausgänge zugeordnet. Die Piezo - Signalgeber 5.1, 5.2 sind als Piezo - Intervall - Signalgeber ausführbar. Bei den Betätigungstastern 6.1, 6.2, 6.3 handelt es sich um Taster mit Rückzugskraft. Ausgangsseitig der autarken Steuereinheit 12 werden drei Steuerleitungsbündel herausgeführt, die jeweils an einen Steckverbinder 7.1, 7.2, 7.3 angeschlossen sind. Die Steckverbinder 7.1, 7.2, 7.3 stehen mit den elektrischen Steuerelementen des Fahrwerkes, der Fahrwerksklappen und des Hydrauliksystems über (nicht gezeigte) Steuerleitungen in Verbindung, die die entsprechenden Betriebsfunktionen zur Betätigung des Fahrwerksystemes auslösen.

Die Verknüpfung der einzelnen Elemente der autarken Steuereinheit 12 geschieht folgendermaßen. Die beiden Buchsenklemmen A, B bilden den Eingang der Steuereinheit, der an einer extern gespeisten Gleichspannung liegt. Dabei wird an einer Buchsenklemme A der Pluspol und an einer weiteren Buchsenklemme B der Minuspol einer Gleichspannungsquelle 8 gelegt. Die Buchsenklemme A ist mit dem Schaltereingang des Schutzschalters 1 verbunden. Der Ausgang des Schutzschalters 1 ist auf den Eingang des Spannungsreglers 2 geschalten. Auf dieser Leitungsverzweigung befindet sich eine Verzweigstelle als Knotenpunkt 10.1.

Eine Verbindung, die dem Knotenpunkt 10.1 abgezweigt ist, liegt auf einem ersten Schaltereingang des Wahlumschalters 3, dem ein erster Schalterausgang - der strombahnbezogen in der Einsstellung (Position A) eines ersten Betätigungsgliedes des Wahlumschalters 3 überbrückt wird - und ein zweiter Schalterausgang - der strombahnbezogen in der Zweistellung (Position B) des ersten Betätigungsgliedes des Wahlumschalters 3 überbrückt wird - zugeordnet ist. Auf dieser abgezweigten Verbindung befindet sich - dem ersten Schaltereingang des Wahlumschalters 3 vorgelagert - eine weitere Verzweigstelle als Knotenpunkt 10.3. Eine Verbindung, die man diesem Knotenpunkt 10.3 abzweigt, ist mit dem Eingang eines ersten Steckverbinders 7.1 (an dessen Kontakt B) verbunden. Der genannten Steckverbinder 7.1 ist mit einem Abgang (an dessen Kontakt A) direkt an Masse 9 gelegt. Der erste Steckverbinder 7.1 befindet sich mit einem (nicht gezeigten) Hydraulikventil des bordinternen Hydrauliksystems in Verbindung, die die Bewegung des Fahrwerkes des Flugzeuges hydraulisch sichert. Ein Abgang des Spannungsreglers 2 ist mit der Buchsenklemme B verbunden, wobei auf dieser Leitungsverzweigung eine Verzweigstelle als Knotenpunkt 10.2 liegt, die direkt an Masse 9 gelegt ist. Ein weiterer Abgang des Spannungsreglers 2 liegt ebenfalls an Masse 9 an. Der Ausgang des Spannungsreglers 2 steht mit einem zweiten Schaltereingang des Wahlumschalters 3, dem ein dritter Schalterausgang - der strombahnbezogen in der Einsstellung (Position A) eines zweiten Betätigungsgliedes des Wahlumschalters 3 überbrückt wird - und ein vierter Schalterausgang - der strombahnbezogen in der Zweistellung (Position B) des zweiten Betätigungsgliedes des Wahlumschalters 3 überbrückt wird - zugeordnet ist. Der erste Schalterausgang ist mit einem ersten Eingang der zweiten Zeitverzögerungseinheit 4.2 verbunden. Der zweite Eingang der zweiten Zeitverzögerungseinheit 4.2 ist mit einem dritten Schalterausgang verbunden, auf den der Pluspol der geregelten Gleichspannung geschalten wird. Auf dieser Leitungsverzweigung liegt eine Verzweigstelle als Knotenpunkt 10.4, die mit einem Anschluß eines ersten Piezo - Signalgebers 5.1 verbunden ist. Die zweite Zeitverzögerungseinheit 4.2 ist mit einem Abgang direkt an Masse 9 gelegt. Ebenso liegt ein weiterer Anschluß des ersten Piezo - Signalgebers 5.1 direkt an Masse 9. Der zweite Schalterausgang ist mit einem ersten Eingang der ersten Zeitverzögerungseinheit 4.1 verbunden. Auf dieser Leitungsverzweigung liegt eine Verzweigstelle als Knotenpunkt 10.6, die mit einem ersten Eingang der dritten Zeitverzögerungseinheit 4.3 in Verbindung steht. Der vierte Schalterausgang steht mit einem zweiten Eingang der ersten Zeitverzögerungseinheit 4.1 in Verbindung. Auf dieser Leitungsverzweigung befindet sich eine Verzweigstelle als Knotenpunkt 10.5, die an einen Anschluß des zweiten Piezo - Signalgebers 5.2 gelegt ist.

Eine auf letztgenannter Leitungsverzweigung zusätzliche Verzweigstelle als Knotenpunkt 10.8, die dem zweiten Eingang der ersten Zeitverzögerungseinheit 4.1 vorgelagert liegt, ist mit einem dritten Eingang der ersten Zeitverzögerungseinheit 4.1 verbunden, auf den der Pluspol der geregelten Gleichspannung geschalten wird.
Die erste Zeitverzögerungseinheit 4.1 ist mit einem Abgang direkt an Masse 9 gelegt. Ebenso liegt ein weiterer Anschluß des zweiten Piezo - Signalgebers 5.2 direkt an Masse 9. Ein erster Ausgang der ersten Zeitverzögerungseinheit 4.1 steht mit einem Eingang des dritten Steckverbinders 7.3 (an dessen Kontakt E) in Verbindung. Ein weiteren Eingang des dritten Steckverbinders 7.3 (an dessen Kontakt B) ist über einen ersten Betätigungstaster 6.1 mit einem Ausgang der zweiten Zeitverzögerungseinheit 4.2 verbunden. Der genannten Steckverbinder 7.3 ist mit zwei Abgängen (an dessen Kontakten C, F) direkt an Masse 9 gelegt. Der dritte Steckverbinder 7.3 befindet sich mit (nicht gezeigten) Steuerelementen, die elektrisch die Bewegung der Fahrwerksklappen auslösen, in Verbindung. Ein zweiter Ausgang der ersten Zeitverzögerungseinheit 4.1 ist mit einem zweiten Eingang der dritten Zeitverzögerungseinheit 4.3 verbunden, auf den der Pluspol der geregelten Gleichspannung geschalten wird. Ein Ausgang der dritten Zeitverzögerungseinheit 4.3 ist über einen zweiten Betätigungstaster 6.2 mit einem Eingang des zweiten Steckverbinders 7.2 (an dessen Kontakt B ) verbunden, wobei auf der dem zweiten Betätigungstaster 6.2 vorgeschaltenen Leitungsverzweigung eine Verzweigstelle als Knotenpunkt 10.7 liegt. Dieser Knotenpunkt 10.7 ist über einen dritten Betätigungstaster 6.3 mit einem weiteren Eingang des zweiten Steckverbinders 7.2 (an dessen Kontakt D) verbunden. Der genannten Steckverbinder 7.2 ist mit drei Abgängen (an dessen Kontakten A, C, E) direkt an Masse 9 gelegt. Der zweite Steckverbinder 7.2 befindet sich mit (nicht gezeigten) Steuerelementen, die elektrisch die Bewegung des Fahrwerkes auslösen, in Verbindung.

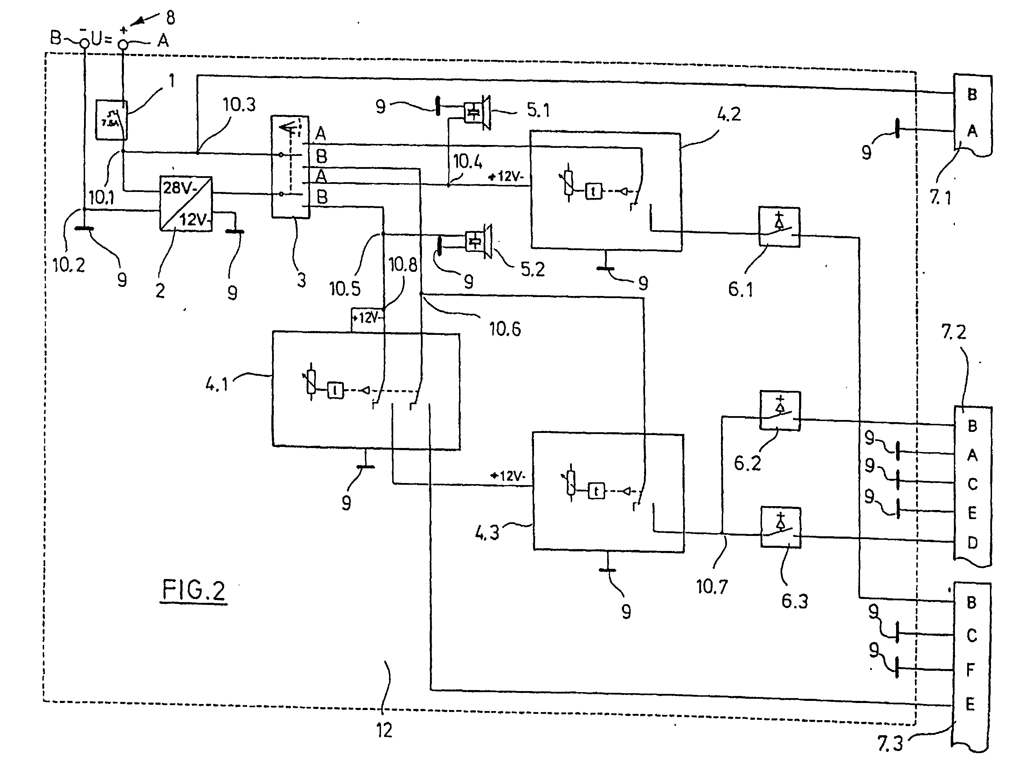

Die **Fig.2** zeigt die autarke Steuereinheit 12 zur externen Überprüfung der Fahrwerksfunktionen eines Flugzeuges als Übersichtsschaltbild, wodurch die Darstellung nach der Fig.1 ergänzt wird. Der Eingang der autarken Steuereinheit 12 wird mit einer Gleichspannung von 12 V (zwölf Volt) versorgt. Der Schutzschalter 1 besitzt eine thermische Überstromauslösung für 7,5 A (siebenkommafünf Ampere) Nennstrom. Er ist durch eine Sicherung gleicher Nennstromstärke ersetzbar. Der Spannungsregler 2 soll die ihm eingangsseitig anliegenden 28 V GS (achtundzwanzig Volt Gleichspannung) auf eine ausgangsseitig reduzierte Arbeitsspannung von 12 V GS (zwölf Volt Gleichspannung) regeln. Der Wahlumschalter 3 wird als Sicherheitswahlschalter angegeben, da mit ihm eine gesicherte Vorwahl zur Auslösung der Testreihe am Fahrwerk erfolgt.

Es werden Zeitverzögerungseinheiten 4.1, 4.2, 4.3 mit einer Anzugsverzögerung von 10 s (zehn Sekunden) angeordnet, die für den Anschluß an eine Betriebsspannung von 11 V - 15 V (elf Volt bis fünfzehn Volt) geeignet sind.

Die zehn Sekunden an Zeitverzögerung erscheinen ausreichend, damit nach der ersten Zeitverzögerungseinheit 4.1 die Fahrwerksklappen aufgefahren werden [Eingang / Kontakt E des dritten Steckverbinders 7.3]. Die Betätigungstaster 6.2, 6.3 werden nach weiteren zehn Sekunden der dritten Zeitverzögerungseinheit 4.3 aktiviert. Damit wird dann das Fahrwerk aus- oder eingefahren. Die beiden Piezo - Signalgeber 5.1, 5.2 sollen akustisch eine Warnung gegenüber Dritten auslösen, die unmittelbar vor und während der Durchführung des Fahrwerktestes Dritte vor gefahrendrohenden Situationen warnt. Die drei Betätigungstaster 6.1, 6.2, 6.3 mit Rückzugskraft sind als Stößeltaster mit Druckkontaktanordnung schaltungsmäßig ausführbar.

Mit dem Wahlumschalter 3 als Sicherheitsschalter wird eine Vorauswahl zur Durchführung des Fahrwerktests getroffen. In der Ruhestellung sind die beiden stromschaltenen Betätigungsglieder (Schaltglieder) in Nullstellung des Wahlumschalters 3 auf " Aus " geschalten. Federbelastet läßt sich der Schalter in einer vertikale Ebene nach links oder rechts in Eins- oder Zweistellung (Position A oder B) bewegen. Nach Loslassen des Schaltknopfes springt der Wahlumschalters 3 in Nullstellung zurück, wodurch alle Schaltebenen sich auf" Aus " befinden. Durch die Bewegung des Wahlumschalters 3 in Zweistellung (Position B) wird zunächst durch den zweiten Piezo - Signalgeber 5.2 akustischer mit Alarmton vorgewarnt. Gleichzeitig wird die erste Zeitverzögerungseinheit 4.1 aktiviert [Stromleitungsweg: vierter Schalterausgang des Wahlumschalters 3 - Knotenpunkt 10.8 - dritter Eingang der ersten Zeitverzögerungseinheit 4.1], weshalb nach Ablauf von 10 s (zehn Sekunden) Zeitverzögerung die dritte Zeitverzögerungseinheit 4.3 anspricht [Stromleitungsweg: zweiter Ausgang der ersten Zeitverzögerungseinheit 4.1 - zweiter Eingang der dritten Zeitverzögerungseinheit 4.3]. Es ist realisiert, daß nach Ablauf der Zeitverzögerung der ersten Zeitverzögerungseinheit 4.1 (als sogenannte Alarmzeit) die Fahrwerksklappen geöffnet werden [Eingang / Kontakt E des dritten Steckverbinders 7.3].

Ein entsprechender Stromfluß aktiviert über den dritten Steckverbinder 7.3 [Stromleitungsweg: zweiter Schalterausgang des Wahlumschalters 3 - erster Eingang / erster Ausgang der ersten Zeitverzögerungseinheit 4.1 - der eine Eingang / Kontakt E des dritten Steckverbinders 7.3] die (nicht gezeigten) Steuerelemente der Fahrwerksklappen, deren Funktion über den ersten Steckverbinder 7.1 vom bordeigenen Hydrauliksystem frei gegeben wird. Das läßt sich auch vom Bedienungspersonal nach dem Auslösen der Alarmfunktion nicht manipulieren. Während dieser vorgenannten Zeitverzögerung kann keine Fahrwerksfunktion aus Sicherheitsgründen ausgeführt werden.

Nach Ablauf der Zeitverzögerung der dritten Zeitverzögerungseinheit 4.3 von weiteren 10 s (zehn Sekunden) werden von ihr ausgangsseitig der zweite Betätigungstaster 6.2 " Fahrwerk einfahren " und der dritte Betätigungstaster 6.3 " Fahrwerk ausfahren " aktiviert [Stromleitungsweg: zweiter Schalterausgang des Wahlumschalters 3 - Knotenpunkt 10.6 - erster Eingang / der eine Ausgang der dritten Zeitverzögerungseinheit 4.3 - Knotenpunkt 10.7 - zweiter / dritter Betätigungstaster 6.2, 6.3]. Die Betätigung des dritten Betätigungstasters 6.3 aktiviert über den zweiten Steckverbinder 7.2 [weiterer Eingang / Kontakt D des zweiten Steckverbinders 7.2] die (nicht gezeigten) Steuerelemente des Fahrwerkes auf " Fahrwerk ausfahren ", wogegen der zweite Betätigungstaster 6.2 über den zweiten Steckverbinder 7.2 [Eingang / Kontakt B des zweiten Steckverbinders 7.2] die (nicht gezeigten) Steuerelemente des Fahrwerkes auf " Fahrwerk einfahren " aktiviert.

Durch Bewegung des Wahlumschalters 3 in Einsstellung (Position A) zeigt der erste Piezo - Signalgeber 5.1 akustisch das bevorstehende Schließen der Fahrwerksklappen an. Die zweite Zeitverzögerungseinheit 4.2 schaltet die 28 V GS (achtundzwanzig Volt Gleichspannung) nach zehn Sekunden frei auf den ersten Betätigungstaster 6.1 " Klappe zu ", mit der die Klappen zugefahren werden. Mit Bewegung des Wahlumschalters 3 in Zweistellung (Position B) werden 12 V GS (zwölf Volt Gleichspannung) auf den zweiten Piezo - Signalgeber 5.2 und gleichzeitig auf die erste Zeitverzögerungseinheit 4.1 gegeben, wobei der zweite Piezo - Signalgeber 5.2 akustisch Alarm auslöst. Nach zehn Sekunden schaltet die erste Zeitverzögerungseinheit 4.1 die 28 V GS (achtundzwanzig Volt Gleichspannung) zum dritten Steckverbinder 7.3 [Eingang / Kontakt E des dritten Steckverbinders 7.3] durch und die Fahrwerksklappen fahren auf. Gleichzeitig mit dem Auffahren der Fahrwerksklappen wird die 12 V GS (zwölf Volt Gleichspannung) an die dritte Zeitverzögerungseinheit 4.3 gegeben.

Nach zehn Sekunden können dann die Betätigungstaster 6.2, 6.3 betätigt werden, je nachdem , in welchem Zustand sich das Fahrwerk befindet [ein- oder ausgefahrener Zustand]. Einer der beiden Piezo - Signalgeber 5.1, 5.2 befindet sich während der ganzen Aktion immer in Tätigkeit.

Dabei ist zu beachten, daß - bevor das Fahrwerk gefahren wird [bei Zweistellung (Position B) des Wahlumschalters 3] - immer erst ein Ausfahrbefehl an die Fahrwerksklappen [Eingang / Kontakt E des dritten Steckverbinders 7.3] geht.

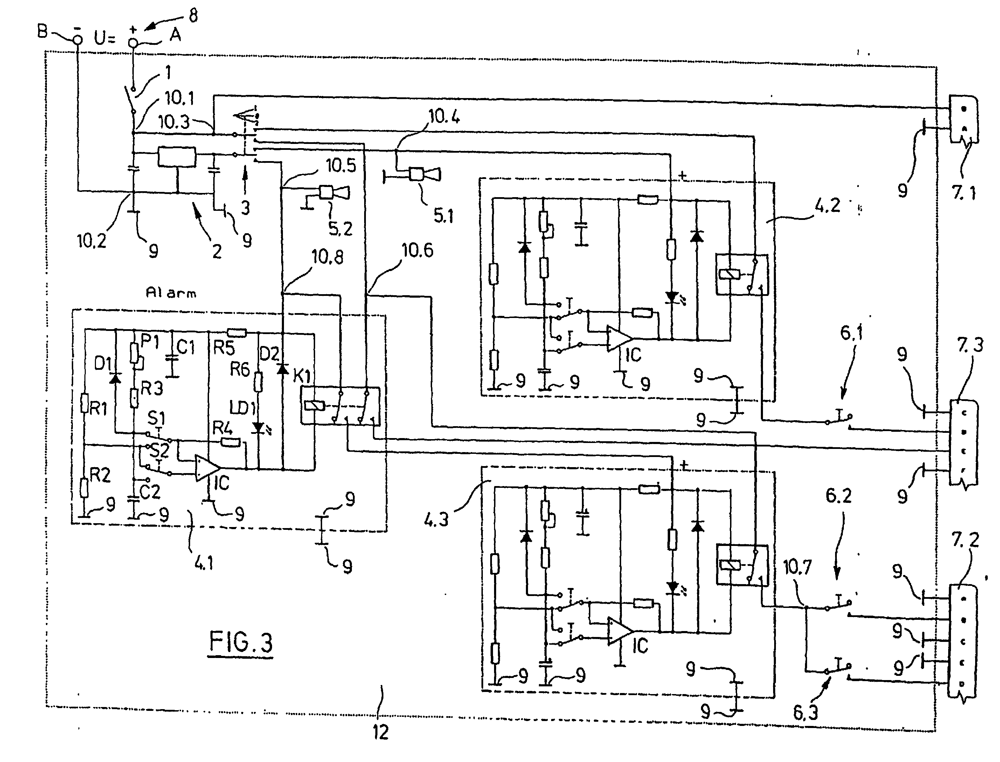

In **Fig.3** wird ein ausführliches Schaltbild der autarken Steuereinheit 12 wiedergegeben. Dieses Schaltbild zeigt die schaltungsmäßigen Verknüpfungen der einzelnen Schaltungselemente nach den Figuren 1 und 2, die im besonderen durch den Aufbau der drei Zeitverzögerungseinheiten 4.1, 4.2, 4.3 ergänzt wird. Die nachfolgende Ausführungsform konzentriert sich deshalb auf die Schaltungsbeschreibung einer Zeitverzögerungseinheit 4.1, 4.2, 4.3, da diese den gleichen Schaltungsaufbau besitzen.

Der in den Zeitverzögerungseinheiten 4.1, 4.2, 4.3 eingesetzte Operationsverstärker IC arbeitet als Komparator. Er vergleicht die Ladespannung an einem Kondensator mit einer fest eingestellten Schwelle. Das zeitbestimmte RC-Glied wird aus den Werten der Reihenschaltung von (eingestelltem Widerstandswert des Potentiometer) P1 plus R3 und dem Elektrolytkondensator (Elko) C2 gebildet. Der Spannungsteiler R1 / R2 gibt die Schaltschwelle für den Komparator vor.

Die Kenngröße für das RC-Glied ist die Zeitkonstante τ. Es gibt die Anfangssteigung der Lade- bzw. Entladekurve an. Elektrolytkondensator C2 plus Widerstand R3 und Potentiometer P1 in einer Minimalstellung ergibt sich beispielsweise eine minimale Zeitkonstante von 0,27 Sekunden. Befindet sich das Potentiometer P1 in Maximalstellung, ergibt sich eine maximale Zeitkonstante τ von cirka 100 Sekunden.
Befinden sich die Schalter S1 und S2 in unterer Stellung b, geht der Ausgang des Operationsverstärkers IC beim Anlegen der Versorgungsspannung sofort nach Masse 9 und kippt in dem Augenblick zurück nach Plus, wenn der Umschaltpunkt erreicht ist. Der Widerstand R4 im Rückkopplungszweig stellt eine Mitkopplung dar, das heißt, der Zustand des Ausganges wird hochohmig auf +**In** zurückgeführt und verstärkt dort die eingetretene Umschalttendenz. Solange der Ausgang von IC gegen Masse 9 schaltet, fällt das Relais K1 ab. Die Freilaufdiode D2 schließt Induktionsspitzen der Relaisspule des Relais K1 kurz.

Um keine unerwünschte Rückwirkungen durch das Schalten des Relais K1 zu bekommen, ist der Lastteil über Widerstand R5 und den Stütz-Elektrolytkondensator (Elko) C1 abgekoppelt. Zur Schaltungsauslegung der gleichartigen Zeitverzögerungseinheiten 4.1, 4.2, 4.3 wird auf nachfolgende ergänzende Information hingewiesen, wonach der Spannungsteiler R1/R2 ungewöhnlich niederohmig ist, obwohl die Operationsverstärker - Eingänge sehr hochohmig sind. Hier fließt also ein relativ großer Querstrom, der viel höher ist als es für IC erforderlich wäre. Dieser Sachverhalt begründet sich folgendermaßen: Die Verzögerungszeit setzt in jedem Fall beim Anlegen von +Uᵥ ein; der zeitbestimmende Elko C2 muß sich nach dem Abklemmen wieder entladen haben, ehe man beim erneuten Anschluß dieselben Zeitverhältnisse vorfindet. Für ein schnelles Entladen des Elko C2 sorgt die Diode D1, die nach dem Abklemmen von +Uᵥ diesen Elko C2 über den Widerständen R1 und R2 nach Masse 9 entlädt. Die Schaltung (der Zeitverzögerungseinheit 4.1, 4.2, 4.3) ist danach sofort wieder betriebsbereit, nachdem man die Versorgungsspannung abgeklemmt hat. Die Zeitverzögerungseinheiten 4.1, 4.2, 4.3 arbeiten zuverlässig bei einer Betriebsspannung zwischen elf Volt bis fünfzehn Volt Gleichspannung.

Der Einsatz der autarken Steuereinheit 12 trägt zur effektiven Nutzung der Dockliegezeit eines Flugzeuges bei. Mit ihr ist es möglich, vollkommen unabhängig von der bordeigenen Elektrik / Elektronik und ohne Nutzung aufwendiger Testsoftware autark - ohne den bordeigenen Computer: " Landing Gear Control Interface Unit " - die Bewegung des Fahrwerkes: " Fahrwerk ausfahren / Fahrwerk einfahren " zu überprüfen. Außerdem lassen sich mit ihr die Federbeine (linkes und / oder rechtes Federbein) wie auch die Fahrwerksklappen separat bewegen. Dadurch kann eine optimale Einstellung durchgeführt werden. Die Federbeine fahren schaltungsbedingt natürlich nur dann, wenn die Fahrwerksklappen aufgefahren sind. Die Klappen selbst sind - zwecks ihrer Justierung - einzeln links und / oder rechts fahrbar.
Mit der autarken Steuereinheit 12 kann der Klappeneinbau, das Spaltmaß, die Freigängigkeit des Fahrwerkes im Fahrwerkschacht, die Aus- und Einfahrzeiten des Fahrwerkes sowie die Dichtheit des Hydrauliksystems überprüft werden. Das kann vollkommen unabhängig davon sein, ob andere Prüfungen durchgeführt oder das Flugzeug nicht mit Energie versorgt wird, da möglicherweise an der bordeigenen Elektrik / Elektronik gearbeitet wird und deshalb das Flugzeug stromlos sein muß.
Die autarke Steuereinheit 12 behindert keine laufenden oder nachfolgenden Tests am Flugzeug und sorgt für akustische Warnung gegenüber Dritten (Personal) bei den laufenden Fahrwerktests. Sie realisiert eine absolute Zeitersparnis durch Verminderung der Verweilzeiten im Dock.

### Bezugszeichen

- 1: Schutzschalter; thermische Auslösung
- 2: Spannungsregler
- 3: Wahlumschalter, zweipolig; 3 Schaltstellungen
- 4.1, 4.2, 4.3: Zeitverzögerungseinheit
- 5.1, 5.2: Piezo-Signalgeber
- 6.1, 6.2,, 6.3: Betätigungstaster mit Rückzugkraft; Stößeltaster mit Druckkontaktanordnung
- 7.1, 7.2, 7.3: Steckverbinder
- 8: Gleichspannungsquelle
- 9: Masse
- 10.1, 10.2, 10.3: Knotenpunkt (Leitungsabzweig von einer Leitung)
- 10.4, 10.5, 10.6: Knotenpunkt
- 10.7, 10.8: Knotenpunkt
- 12: autarke Steuereinheit
- A, B: Buchsenklemme
- +: Pluspol
- -: Minuspol
- P1: Potentiometer
- R1, R2, R3: ohmscher Widerstand
- C1, C2: Elektrolytkondensator
- τ: Zeitkonstante
- S1, S2: Schalter
- K1: Relais
- LD1: Leuchtdiode
- D2: Freilaufdiode
- IC: Operationsverstärker

## Patentansprüche

1. Autarke Steuereinheit zur externen Überprüfung der Fahrwerksfunktionen eines Flugzeuges, bestehend aus einem Schutzschalter (1), einem Spannungsregler (2), einem zweipoligen Wahlumschalter (3) mit drei Schaltstellungen, drei Zeitverzögerungseinheiten (4.1, 4.2, 4.3), zwei Piezo - Signalgebern (5.1, 5.2) und drei Betätigungstastern (6.1, 6.2, 6.3) mit Rückzugskraft, bei der den beiden Schaltereingängen des Wahlumschalters (3) strombahnbezogen jeweils zwei Schalterausgänge zugeordnet sind und die Betätigungsglieder des Wahlumschalters (3) sich synchron aus einer definierten Nullstellung in je eine Betriebsstellung, die als Eins- und Zweistellung (Position A und B) definiert sind, bewegen lassen, wodurch die Strombahn zwischen dem jeweiligen Schalterein- und dem betreffenden -ausgang geschlossen ist, bei der eingangsseitig eine Gleichspannungsquelle (8) angeschlossen ist, wobei ausgangsseitig der Steuereinheit (12) Steuerleitungen abgezweigt sind, die drei Steckverbinder (7.1, 7.2, 7.3) belegen, die mit den elektrischen Steuerelementen des Fahrwerkes einschließlich der Fahrwerksklappen und des Hydrauliksystems verbunden sind, wodurch unabhängig des bordeigenen Steuersystems, das vom Cockpit überwacht wird, sich außerbords des Flugzeuges die Fahrwerksfunktionen überprüfen lassen, bei der alle Verbindungen elektrisch leitend sind,
**gekennzeichnet durch** folgende Merkmale:
- der Pluspol der Gleichspannungsquelle (8) liegt an einer Buchsenklemme (A) und der Minuspol der Gleichspannungsquelle (8) liegt an einer weiteren Buchsenklemme (B) der autarken Steuereinheit (12) an,
- die eine Buchsenklemme (A) ist mit dem Eingang des Schutzschalters (1) verbunden, dessen Ausgang mit dem Eingang des Spannungsreglers (2) in Verbindung steht, wobei letztere Leitungsverzweigung einen Knotenpunkt (10.1) besitzt, der mit einem ersten Schaltereingang des Wahlumschalters (3) verbunden ist,
- die weitere Buchsenklemme (B) ist mit einem Abgang des Spannungsreglers (2) verbunden, wobei letztere Leitungsverzweigung einen Knotenpunkt (10.2) besitzt, der mit einer Verbindung direkt an eine Masse (9) gelegt ist,
- der Ausgang des Spannungsreglers (2) und ein zweiter Schaltereingang des Wahlumschalters (3) sind miteinander verbunden,
- die zwischen dem Knotenpunkt (10.1) und dem ersten Schaltereingang des Wahlumschalters (3) liegende Leitungsverzweigung besitzt einen Knotenpunkt (10.3), der mit einem Eingang eines ersten Steckverbinder (7.1) verbunden ist, wobei der erste Steckverbinder (7.1) zur Verbindung mit einem Hydrauliksicherheitsventil, das zum bordeigenen Hydrauliksystem des Flugzeuges zählt und die Fahrwerksfunktionen hydraulisch sichert, vorgesehen ist,
- ein der Einsstellung des Wahlumschalters (3) entsprechender erster Schalterausgang, der strombahnbezogen dem ersten Schaltereingang des Wahlumschalters (3) zugeordnet ist, ist mit dem ersten Eingang einer zweiten Zeitverzögerungseinheit (4.2), der einen Schaltkontakt belegt, verbunden,
- ein der Zweistellung des Wahlumschalters (3) entsprechender zweiter Schalterausgang, der strombahnbezogen dem ersten Schaltereingang des Wahlumschalters (3) zugeordnet ist, ist mit einem ersten Eingang einer ersten Zeitverzögerungseinheit (4.1), der einen ersten Schaltkontakt belegt, verbunden, wobei auf letzterer Leitungsverzweigung ein Knotenpunkt (10.6) liegt, der mit einem ersten Eingang einer dritten Zeitverzögerungseinheit (4.3), der einen Schaltkontakt belegt, verbunden ist,
- ein der Einsstellung des Wahlumschalters (3) entsprechender dritter Schalterausgang, der strombahnbezogen dem zweiten Schaltereingang des Wahlumschalters (3) zugeordnet ist, ist mit dem zweiten Eingang der zweiten Zeitverzögerungseinheit (4.2) verbunden, wobei auf letzterer Leitungsverzweigung ein Knotenpunkt (10.4) liegt, der mit einem Anschluß des ersten Piezo - Signalgebers (5.1) verbunden ist,
- ein der Zweistellung des Wahlumschalters (3) entsprechender vierter Schalterausgang, der strombahnbezogen dem zweiten Schaltereingang des Wahlumschalters (3) zugeordnet ist, ist mit dem zweiten Eingang der ersten Zeitverzögerungseinheit (4.1), der einen zweiten Schaltkontakt belegt, verbunden, wobei ein Knotenpunkt (10.5), der auf letzterer Leitungsverzweigung liegt, mit einem Anschluß eines zweiten Piezo - Signalgebers (5.2) verbunden ist und ein weiterer Knotenpunkt (10.8), der auf letzterer Leitungsverzweigung liegt, mit einem dritten Eingang der Zeitverzögerungseinheit (4.2) in Verbindung steht,
- ein erster Ausgang der ersten Zeitverzögerungseinheit (4.1), der den ersten Schaltkontakt belegt, ist mit einem Eingang eines dritten Steckverbinders (7.3) und ein Ausgang der zweiten Zeitverzögerungseinheit (4.2), der den Schaltkontakt belegt, ist über einen ersten Betätigungstaster (6.1) mit einem weiteren Eingang des dritten Steckverbinders (7.3) verbunden, wobei der dritte Steckverbinder (7.3) zur Verbindung mit den die Fahrwerksklappenfunktionen auslösenden Steuerelementen vorgesehen ist,
- ein zweiter Ausgang der ersten Zeitverzögerungseinheit (4.1), der den zweiten Schaltkontakt belegt, ist mit einem zweiten Eingang einer dritten Zeitverzögerungseinheit (4.3) verbunden,
- ein Ausgang der dritten Zeitverzögerungseinheit (4.3), der den Schaltkontakt belegt, ist über einen zweiten Betätigungstaster (6.2) mit einem Eingang des zweiten Steckverbinders (7.2) verbunden, wobei auf der dem zweiten Betätigungstaster (6.2) vorgeschalteten Leitungsverzweigung ein Knotenpunkt (10.7) liegt, der über einen dritten Betätigungstaster (6.3) mit einem weiteren Eingang des zweiten Steckverbinders (7.2) verbunden ist, wobei der zweite Steckverbinder (7.2) mit Steuerelementen in Verbindung steht, die die flugzeugseitigen Fahrwerksfünktionen steuern,
- mit einer Verbindung sind jeweils ein weiterer Abgang des Spannungsreglers (2), ein Abgang des ersten Steckverbinders (7.1), drei weitere Abgänge des zweiten Steckverbinders (7.2), zwei weitere Abgänge des dritten Steckverbinders (7.3), je ein weiterer Anschluß des ersten und des zweiten Piezo - Signalgebers (5.1, 5.2) direkt an Masse (9) gelegt.

2. Autarke Steuereinheit nach Anspruch 1, **dadurch gekennzeichnet, daß** der Schutzschalter (1) mit einer thermischen Überstromauslösung versehen ist.

3. Autarke Steuereinheit nach Anspruch 1, **dadurch gekennzeichnet, daß** der Spannungsregler (2) die Eingangsspannung auf einen Nennwert von 12 V (zwölf Volt) Gleichspannung regelt.

4. Autarke Steuereinheit nach Anspruch 1, **dadurch gekennzeichnet, daß** jede Zeitverzögerungseinheit (4.1, 4.2, 4.3) eine Anzugsverzögerung von 10 s (zehn Sekunden) realisiert und für eine Betriebsspannung von 11 V - 15 V (elf Volt bis fünfzehn Volt) ausgelegt ist.

5. Autarke Steuereinheit nach Anspruch 1, **dadurch gekennzeichnet, daß** jede Zeitverzögerungseinheit (4.1, 4.2, 4.3) einen Operationsverstärker als Schaltstufe besitzt, der als Komperator arbeitet, welcher die Ladespannung an einem Kondensator mit einer fest eingestellten Schaltschwelle vergleicht.

6. Autarke Steuereinheit nach Anspruch 1, **dadurch gekennzeichnet, daß** die Piezo - Signalgeber (4.1, 5.2) als Piezo - Intervall - Signalgeber ausgeführt sind.

7. Autarke Steuereinheit nach Anspruch 1, **dadurch gekennzeichnet, daß** der Schutzschalter (1) durch eine Sicherung ersetzt ist.

8. Autarke Steuereinheit nach Anspruch 1, **dadurch gekennzeichnet, daß** die Betätigungstaster (6.1, 6.2, 6.3) als Stößeltaster mit Druckkontaktanordnung ausgeführt sind.

## Claims

1. Autonomous control unit for external monitoring of the undercarriage functions of an aircraft, comprising a protective switch (1), a voltage regulator (2), a two-pin selector switch (3) with three switch positions, three time delay units (4.1, 4.2, 4.3), two piezo signal emitters (5.1, 5.2) and three actuator buttons (6.1, 6.2, 6.3) with return force, in which current-path-related two switch outputs are allocated to each of the two switch inputs of the selector switch (3) and the actuator elements of the selector switch (3) can be moved in synchrony from a defined zero position into an operating position defined as a first and second position (position A and B), whereby the current path between the respective switch input and output is closed, where on the input side a DC voltage source (8) is connected, and on the output side of the control unit (12) control lines are branched which occupy the three plug connectors (7.1, 7.2, 7.3) connected with the electrical control elements of the undercarriage including the undercarriage flaps and hydraulic system, where independently of the onboard computer system monitored from the cockpit, the undercarriage functions can be tested outside the aircraft, where all connections are electrically conductive,
**characterised by** the following features:
- the positive terminal of the DC voltage source (8) is linked to a connecting block (A) and a negative terminal of the DC voltage source (8) is linked to a further connecting block (B) of the autonomous control unit (12),
- the one connecting block (A) is connected with the input of the protective switch (1), the output of which is connected with the input of the voltage regulator (2), the latter conductor branch having a node point (10.1) connected with a first switch input of the selector switch (3),
- the further connecting block (B) is connected with an output of the voltage regulator (2), the latter conductor branch having a node point (10.2) linked with one connection directly to earth (9),
- the output of the voltage regulator (2) and a second switch input of the selector switch (3) are connected together,
- the conductor branch lying between the node point (10.1) and the first switch input of the selector switch (3) has a node point (10.3) connected with an input of the first plug connector (7.1), the first plug connector (7.1) being provided for connection with a hydraulic safety valve forming part of the on-board hydraulic system of the aircraft and hydraulically securing the undercarriage functions,
- a first switch output corresponding to the first position of the selector switch (3) and allocated current-path-related to the first switch input of the selector switch (3) is connected with the first input of a second time delay unit (4.2) occupying a switch contact,
- a second switch output corresponding to the second position of the selector switch (3) and allocated current-path-related to the first switch input of the selector switch (3) is connected with a first input of a first time delay unit (4.1) occupying a first switch contact, where on the latter conductor branch lies a node point (10.6) which is connected with a first input of a third time delay unit (4.3) occupying a switch contact,
- a third switch output corresponding to the first position of the selector switch (3) and allocated current-path-related to the second switch input of the selector switch (3) is connected with the second input of the second time delay unit (4.2), where on the latter conductor branch lies a node point (10.4) which is connected with a connection of the first piezo signal emitter (5.1),
- a fourth switch output corresponding to the second position of the selector switch (3) and allocated current-path-related to the second switch input of the selector switch (3) is connected with the second input of the first time delay unit (4.1) occupying a second switch contact, where a node point (10.5) lying on the latter conductor branch is connected with a connection of a second piezo signal emitter (5.2) and a further node point (10.8) lying on the latter conductor branch is connected with a third input of the time delay unit (4.2),
- a first output of the first time delay unit (4.1) occupying the first switch contact is connected with an input of a third plug connector (7.3) and an output of the second time delay unit (4.2) occupying the switch contact is connected via a first actuator button (6.1) with a further input of the third plug connector (7.3), where the third plug connector (7.3) is intended for connection with the control elements triggering the undercarriage flap functions,
- a second output of the first time delay unit (4.1) occupying the second switch contact is connected with a second input of a third time delay unit (4.3),
- an output of the third time delay unit (4.3) occupying the switch contact is connected via a second actuator button (6.2) with an input of the second plug connector (7.2), where a node point (10.7) lies on the conductor branch connected before the second actuator button (6.2) and is connected via a third actuator button (6.3) with a further input of the second plug connector (7.2), the second plug connector (7.2) being connected with control elements controlling the undercarriage functions on the aircraft side,
- with one connection, a further output of the voltage regulator (2), an output of the first plug connector (7.1), three further outputs of the second plug connector (7.2), two further outputs of the third plug connector (7.3), a further connection of the first and second piezo signal emitters (5.1, 5.2) are linked directly to earth (9).

2. Autonomous control unit according to claim 1,
**characterised in that** the protective switch (1) is fitted with a thermal excess current release.

3. Autonomous control unit according to claim 1,
**characterised in that** the voltage regulator (2) regulates the input voltage to a nominal value of 12 V (twelve Volt) DC.

4. Autonomous control unit according to claim 1,
**characterised in that** each time delay unit (4.1, 4.2, 4.3) implements a response delay of 10 s (ten seconds) and is designed for an operating voltage of 11 V - 15 V (eleven Volt to fifteen Volt).

5. Autonomous control unit according to claim 1,
**characterised in that** each time delay unit (4.1, 4.2, 4.3) has an operation amplifier as a switch stage which functions as a comparator comparing the charge voltage on a condenser with a set switch threshold.

6. Autonomous control unit according to claim 1,
**characterised in that** the piezo signal emitter (5.1, 5.2) is designed as a piezo interval signal emitter.

7. Autonomous control unit according to claim 1,
**characterised in that** the protective switch (1) is replaced by a fuse.

8. Autonomous control unit according to claim 1,
**characterised in that** the actuator buttons (6.1, 6.2, 6.3) are designed as tappet buttons with press contact arrangement.

## Revendications

1. Unité de commande autonome pour la vérification externe du fonctionnement d'un train d'atterrissage d'aéronef, constituée d'un commutateur de sécurité (1), d'un régulateur de tension (2), d'un commutateur de sélection (3) bipolaire avec trois positions de commutation, de trois unités de retardement (4.1, 4.2, 4.3), de deux piézo-émetteurs de signaux (5.1, 5.2) et de trois touches d'actionnement (6.1, 6.2, 6.3) avec force de retour, deux sorties de commutateur étant reliées, en fonction du trajet du courant, à chaque entrée de commutateur du commutateur de sélection (3) et les éléments d'actionnement du commutateur de sélection (3) pouvant être déplacés de façon synchronisée d'une position définie zéro vers une position de marche, ces positions ayant été définies comme position un et deux (A et B), le trajet de courant ayant été fermé entre chaque entrée de commutateur et la sortie correspondante, une source de tension continue (8) ayant été reliée du côté de l'entrée et des conduites de commande ayant été déviées du côté de la sortie de l'unité de commande (12), les dites conduites recouvrant trois connecteurs (7.1, 7.2, 7.3) raccordés aux éléments de commande électriques du train d'atterrissage, en ce compris les clapets de train d'atterrissage et le système hydraulique, le fonctionnement du train d'atterrissage pouvant être contrôlé par dessus bord, indépendamment du système de commande de bord contrôlé par le cockpit, tous les raccordements étant électro-conducteurs, et
**caractérisée par** les caractéristiques suivantes :
- le pôle positif de la source de tension continue (8) repose contre une pince de boîtier (A) et le pôle négatif de la source de tension continue (8) repose contre une pince de boîtier (B) de l'unité de commande (12) autonome,
- une pince de boîtier (A) a été reliée à l'entrée du commutateur de sécurité (1) dont la sortie est reliée à l'entrée du régulateur de tension (2), la ramification de canalisation présentant un noeud (10.1) relié à une première entrée du commutateur de sélection (3),
- l'autre pince de boîtier (B) a été reliée à une sortie du régulateur de tension (2), la ramification de canalisation présentant un noeud (10.2) reposant avec un raccordement directement contre une masse (9),
- la sortie du régulateur de tension (2) est reliée à une deuxième entrée du commutateur de sélection (3),
- la ramification de canalisation située entre le noeud (10.1) et la première entrée du commutateur de sélection (3) présente un noeud (10.3) relié avec une entrée d'un premier connecteur à fiches (7.1), le premier connecteur à fiches (7.1) ayant été prévu pour être raccordé à une soupape hydraulique de sécurité faisant partie du système hydraulique de bord de l'aéronef et assurant hydrauliquement le fonctionnement du train d'atterrissage.
- une première sortie de commutateur correspondant au réglage du commutateur de sélection (3) et reliée à la première entrée du commutateur de sélection (3), en fonction du trajet du courant, est reliée à la première entrée d'une seconde unité de retardement (4.2), couvrant un contact de commutation de commande,
- une deuxième sortie de commutateur reliée à la première entrée du commutateur de sélection (3), en fonction du trajet du courant, et correspondant à la seconde position du commutateur de sélection (3) a été reliée à une première entrée d'une première unité de retardement (4.1) couvrant un premier contact de commutation de commande, un noeud (10.6) relié à une première entrée d'une troisième unité de retardement (4.3) couvrant un contact de commutation de commande reposant sur la ramification de canalisation,
- une troisième sortie de commutateur reliée à la seconde entrée du commutateur de sélection (3), en fonction du trajet du courant, et correspondant au réglage du commutateur de sélection (3) a été reliée à la seconde entrée de la seconde unité de retardement (4.2), un noeud (10.4) relié à un raccordement du premier piézo-émetteur de signaux (5.1) reposant sur la ramification de canalisation,
- une quatrième sortie de commutateur reliée à la seconde entrée du commutateur de sélection (3), en fonction du trajet du courant, et correspondant à la seconde position du commutateur de sélection (3) a été reliée à la seconde entrée de la première unité de retardement (4.1) couvrant un deuxième contact de commutation de commande, un noeud (10.5) reposant sur la dernière ramification de canalisation ayant été relié à un raccordement d'un second piézo-émetteur de signaux (5.2) et un autre noeud (10.8) reposant sur la ramification de canalisation étant relié à une troisième entrée de l'unité de retardement (4.2),
- une première sortie de la première unité de retardement (4.1) couvrant le premier contact de commutateur de commande a été reliée à une entrée d'un troisième connecteur à fiches (7.3) et une sortie de la seconde unité de retardement (4.2) couvrant le contact de commutateur de commande a été reliée à une autre entrée du troisième connecteur à fiches (7.3) via une première touche d'actionnement (6.1), le troisième connecteur (7.3) ayant été prévu afin d'être relié aux éléments de commande activant les clapets du train d'atterrissage,
- une seconde sortie de la première unité de retardement (4.1) couvrant le deuxième contact de commutation de commande a été reliée à une deuxième entrée d'une troisième unité de retardement (4.3),
- une sortie de la troisième unité de retardement (4.3) couvrant le contact de commutation de commande a été reliée à une entrée du second connecteur à fiches (7.2) via une deuxième touche d'actionnement (6.2), un noeud (10.7) raccordé à une autre entrée du deuxième connecteur à fiches (7.2) via une troisième touche d'actionnement (6.3) reposant sur la ramification de canalisation connectée en amont de la seconde touche d'actionnement (6.2), le deuxième connecteur (7.2) étant raccordé à des éléments de commande commandant les fonctions de train d'atterrissage de l'aéronef,

2. Unité de commande autonome selon la revendication 1, **caractérisée en ce que** le commutateur de sécurité (1) est doté d'une résolution de surcharge thermique.

3. Unité de commande autonome selon la revendication 1, **caractérisée en ce que** le régulateur de tension (2) règle la tension d'entrée sur une valeur nominale de 12 V (douze volts) tension continue.

4. Unité de commande autonome selon la revendication 1, **caractérisée en ce que** chaque unité de retardement (4.1, 4.2, 4.3) génère un retard de démarrage de 10 s (dix secondes) et est exposée à une tension de régime de 11 V - 15 V (onze à quinze volts).

5. Unité de commande autonome selon la revendication 1, **caractérisée en ce que** chaque unité de retardement (4.1, 4.2, 4.3) possède un amplificateur opérationnel en forme de plot de commutation agissant comme un comparateur comparant la tension de charge sur un condensateur avec un seuil de commutation réglé de manière fixe.

6. Unité de commande autonome selon la revendication 1, **caractérisée en ce que** les piézo-émetteurs de signaux (5.1, 5.2) se présentent sous la forme de piézo-émetteurs de signaux à intervalles.

7. Unité de commande autonome selon la revendication 1, **caractérisée en ce que** le commutateur de sécurité est remplacé par un fusible.

8. Unité de commande autonome selon la revendication 1, **caractérisée en ce que** les touches d'actionnement (6.1, 6.2, 6.3) se présentent sous la forme de touches poussoirs avec système de contact par pression.
